# EUROPÄISCHE PATENTSCHRIFT

(11) **EP 2 172 790 B1**
(45) Veröffentlichungstag und Bekanntmachung des Hinweises auf die Patenterteilung: **05.03.2014**
(21) Anmeldenummer: 09171829.6
(22) Anmeldetag: 30.09.2009
(51) Int. Cl.: G01S 17/95, G01S 7/481, G02B 26/08

(54) **Lidar-Einrichtung aufweisend eine optische Einrichtung mit einer Sende-Einrichtung und einer Empfangseinrichtung**
Lidar system including an optical device with a transmitter and a receiver
Lidar avec un système optique doté d'un dispositif d'émission et d'un dispositif de réception

(30) Priorität: 01.10.2008 DE 102008050201
(43) Veröffentlichungstag der Anmeldung: 07.04.2010
(73) Patentinhaber: Leibniz-Institut für Troposphärenforschung e.V., 04318 Leipzig (DE)
(72) Erfinder: Engelmann, Ronny, 04155, Leipzig (DE); Althausen, Dietrich, 04103, Leipzig (DE)
(74) Vertreter: Viering, Jentschura & Partner Patent- und Rechtsanwälte

(56) Entgegenhaltungen:
- EP-A1- 1 724 635
- JP-A- 2001 194 584
- US-A- 3 963 347
- US-A1- 2008 198 334

## Beschreibung

Die Erfindung betrifft eine Lidar-Einrichtung aufweisend eine optische Einrichtung mit einer Sende-Einrichtung und einer Empfangseinrichtung.

Z.B. in der Atmosphären- und Klimaforschung werden herkömmliche optische Einrichtungen zur Detektion von Partikeln und Aerosolen in der Troposphäre verwendet.

Die optischen Einrichtungen sind meist sehr groß dimensioniert und auch entsprechend schwer, so dass der Transport, der Betrieb und die Wartung dieser optischen Einrichtungen einen hohen Aufwand erfordert. Insbesondere wird aufgrund der Abmessungen und des Gewichts der optischen Einrichtungen zum Transport viel Personal benötigt und beim Betrieb verbrauchen die herkömmlichen optischen Einrichtungen aufgrund des großdimensionierten Lasers viel Energie.

Weitere Nachteile sind hohe Kosten aufgrund der Größe der Komponenten und Probleme beim Transport dieser Einrichtungen über weite Strecken, was gerade in der global betriebenen Troposphärenforschung häufig der Fall ist.

In der Patentschrift US 3,963,347 ist ein auf einem Erbium dotieren Laser basierender Entfernungsmesser für Wolken, Nebel, Dunst und Niederschlag beschrieben. Mittels des Lasers wird ein gepulster Strahl mit einer Wellenlänge von 1,54 µm erzeugt und mittels eines Periskops derart mit dem rückkehrenden Licht ausgerichtet, um die Parallaxe zu reduzieren.

In der europäischen Patentanmeldung EP 1 724 635 A1 ist ein Hand-Videoprojektor offenbart, welcher ein optisches Anti-Verwacklungssystem aufweist, welches vertikal und horizontal in eine Ebene, die senkrecht zur optischen Achse einer Laserprojektionseinheit des Hand-Videoprojektors ist, bewegt werden kann. Dadurch kann einer Ablenkung des vom Hand-Videoprojektor ausgehenden Lichtstrahls auf Grund von Verwackeln des Hand-Videoprojektors entgegengewirkt werden.

Die US-Patentanmeldung US 20080198334 A1 beschreibt einen Videoprojektor mit einer hohen Bildqualität, welche durch Reduzierung des Specklemusters erreicht wird. Dazu wird ein reflektierendes Element senkrecht zu einer Reflektionsebene des Lichtstrahls in einer oszillierenden Art und Weise bewegt.

Folglich besteht ein Bedarf, kleinere und kostengünstigere Geräte zu entwickeln, die die oben genannten Nachteile der herkömmlichen optischen Einrichtungen überwinden.

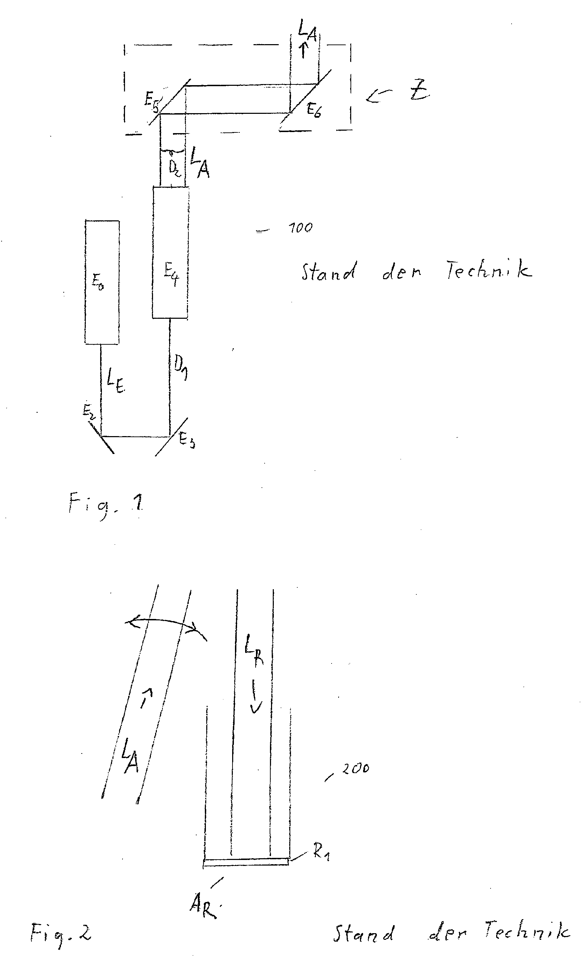

Figur 1 zeigt Komponenten einer herkömmlichen optischen Einrichtung, beispielsweise einer Lidar-Einrichtung 100, zur Detektion von Molekülen, Partikeln und Aerosolen in der Troposphäre. Die Lidar-Einrichtung 100 weist einen Laser E₀ auf, der einen Lichtstrahl oder Lichtpuls L_{E} abstrahlt. Der Lichtstrahl mit einem Durchmesser D₁ wird mittels der Prismen E₂ und E₃ auf einen Lichstrahlaufweiter E₄ umgelenkt, der den Lichtstrahl auf den größeren Durchmesser D₂ aufweitet zu einem aufgeweiteten Lichtstrahl oder Lichtpuls L_{A}.

Anschließend wird der Lichtstrahl durch eine Z-Stufe Z mit den zwei justierbaren Spiegeln E₅ und E₆ geleitet. Die justierbaren Spiegel E₅ und E₆ dienen zur präzisen Anpassung der Richtung des emittierten Laserstrahls L_{A}, dessen Licht, im Falle einer Lidar-Einrichtung zur Troposphärenmessung, nach Aussendung in die Troposphäre von Molekülen, Partikeln und Aerosolen rückgestreut wird und in einem Empfangsbereich A_{R} einer Empfangseinrichtung 200 (siehe Figur 2) der optischen Einrichtung empfangen wird, um anschließend mittels Strahlteilern (vgl. Anordnung 300) zur Messung hinsichtlich seiner optischen Eigenschaften aufgeteilt zu werden.

Zur Messung muss also das ausgesendete Licht Volumina beleuchten, die sich im Gesichtsfeld der Empfängeranordnung befinden.

Damit der rückgestreute Lichtstrahl auch auf den Empfangsbereich fällt, muss die Richtung des von der optischen Einrichtung abgestrahlten Laserstrahls also entsprechend angepasst werden, was auf herkömmliche Weise mittels der justierbaren Spiegel E₅ und E₆ geschieht. Alternativ ist auch eine Bewegung des Empfangsbereichs möglich.

Die Spiegel sind jedoch aufgrund der hohen Anforderungen bezüglich ihrer Präzision, geringer Streuverluste und der Reinheit des ausgesandten Laserlichts sehr aufwendig herzustellen und deshalb entsprechend teuer. Ferner benötigen die justierbaren Spiegel E₅ und E₆ als zusätzliche optische Elemente auch Halterungen und zusätzlichen Platz, was die Abmessungen der gesamten Einrichtung vergrößert und somit dem Wunsch nach kleineren kostengünstigen leichter transportierbaren optischen Einrichtungen zuwiderläuft.

Auch lässt es sich bei der Verwendung dieser zusätzlichen optischen Elemente nicht völlig verhindern, dass die Laserstrahlqualität etwas verschlechtert wird. Ferner kommt es zu Intensitätsverlusten aufgrund der Reflexion an den justierbaren Spiegel E₅ und E₆ und zur Verschlechterung der Reinheit von beispielsweise linear polarisiertem Laserlicht.

Vergleichbare Probleme treten auch bei ähnlich aufgebauten optischen Einrichtungen mit Sende-Einrichtungen und Empfangseinrichtungen auf, deren optische Achsen sich in einem Zielbereich überlappen, wie zum Beispiel Ceilometern, optischen Detektionseinrichtungen zum Detektieren von Gaskonzentrationen oder allgemeiner optischen Messsystemen mit getrennten Sendezweigen und Empfangszweigen.

Der Erfindung liegt die Aufgabe zugrunde, eine optische Einrichtung mit einer Sende-Einrichtung und einer Empfangseinrichtung bereitzustellen, mit der die genannten Nachteile, wie sie beispielsweise bei herkömmlichen Lidar-Einrichtungen aber auch bei anderen optischen Einrichtungen, wie zum Beispiel Ceilometern, optischen Detektionseinheiten zum Detektieren von Gaskonzentrationen oder anderen optischen Messsystemen mit getrennten Sendezweigen und Empfangszweigen gemäß dem Stand der Technik auftreten, überwunden werden können.

Die Aufgabe wird durch eine Lidar-Einrichtung aufweisend eine optische Einrichtung mit einer Sende-Einrichtung und einer Empfangseinrichtung mit den Merkmalen gemäß dem unabhängigen Patentanspruch 1 gelöst.

Es wird eine Lidar-Einrichtung aufweisend eine optische Einrichtung mit einer Sende-Einrichtung, die eine Linsen-Anordnung zum Aussenden eines Lichtstrahls aufweist, welcher Laserlicht mit mindestens zwei unterschiedlichen Wellenlängen aufweist und zurückgestreut wird, und einer Empfangseinrichtung mit einem Empfangsbereich zum Empfangen zumindest eines Teils des rückgestreuten Lichtstrahls, bereitgestellt, wobei die Linsen-Anordnung eine Aufweitungslinse zum Aufweiten eines durch die Linsen-Anordnung verlaufenden Lichtstrahls und ein Objektiv mit mindestens eine Linse aufweist, welche das aufgeweitete Licht parallelisiert, wobei das Objektiv ein Achromat ist und die Linse in einem Winkel zur optischen Achse der Linsen-Anordnung verschiebbar gelagert ist zum Einstellen der Richtung des parallelisierten Lichtstrahls, wobei die optische Einrichtung ferner mindestens einen Aktor, der mit der mindestens einen Linse mechanisch gekoppelt ist, und eine Steuerungseinrichtung zum Steuern des mindestens einen Aktors aufweist, wobei die Steuereinrichtung den Aktor derart ansteuert, dass ein Überlapp des ausgesendeten Lichtstrahls und eines Empfängerfeldes der Empfangseinrichtung eingestellt wird.

Eine der Erfindung zugrundeliegende Idee kann darin gesehen werden, dass die notwendige Feinjustierung des ausgesandten Lichtstrahls der Lidar-Einrichtungmittels der Verschiebung einer verschiebbaren Linse des Systems geschieht, so dass zusätzliche Spiegel zur Justierung des Lichtstrahls, wie sie im Stand der Technik verwendet werden, nicht benötigt werden.

Somit werden sowohl der Platzbedarf der Lidar-Einrichtung als auch deren Kosten reduziert, da zusätzliche Präzisionskomponenten wie zum Beispiel teure Spiegel wegfallen.

Ein weiterer Vorteil der Lidar-Einrichtung gemäß der Erfindung besteht darin, dass Intensitätsverluste aufgrund von Streuung oder Absorption des ausgesandten Lichts an den zusätzlichen Spiegeln vermieden werden.

Auch die Verschlechterung der Reinheit von beispielsweise linear polarisiertem Laserlicht aufgrund der Reflexion des Laserlichts an den Spiegeln kann mittels der erfindungsgemäßen Anordnung verhindert werden.

Ferner wird ein Verfahren zum Justieren der Lidar-Einrichtung gemäß der Erfindung bereitgestellt, wobei ein Lichtstrahl abgestrahlt wird und solange geschwenkt wird, bis der rückgestreute Lichtstrahl auf den Empfangsbereich der Empfangseinrichtung fällt, dann die Linsen-Anordnung in den Strahlengang des Lichtstrahls eingebracht wird und die Linsen-Anordnung mittels Verschiebens mindestens einer Linse in einem Winkel zur optischen Achse der Sende-Einrichtung nachjustiert wird.

Gemäß einer besonders vorteilhaften Ausgestaltung der Erfindung wird eine Lidar-Einrichtung mit einer Linsen-Anordnung bereitgestellt, wobei die mindestens eine Linse in einem rechten Winkel zur optischen Achse der Sende-Einrichtung nachjustiert wird.

Gemäß einer Ausgestaltung ist die mindestens eine Linse eine Objektivlinse.

In einer anderen Variante enthält das Objektiv der Lidar-Einrichtung eine Mehrzahl von Linsen.

Bei der Verwendung einer geeigneten Kombination mehrerer Linsen im Objektiv, beispielsweise mit unterschiedlichen Brechungsindizes, kann eine Verringerung der Abbildungsfehler erreicht werden.

In einer bevorzugten Version weist das Objektiv der Lidar-Einrichtung mindestens eine Sammellinse und eine Streulinse auf.

Ein Achromat, welches im Objektiv enthalten sein kann, enthält beispielsweise Linsen aus Gläsern mit einer unterschiedlichen Abbe-Zahl, d.h. verschieden starker Dispersion. Das Achromat-System enthält typischerweise eine Sammellinse, meist aus Kronglas, und eine Zerstreuungslinse, meist aus Flintglas, mit kleinerer Abbe-Zahl und somit stärkerer Dispersion als die Sammellinse. Dadurch kann der Farblängsfehler, d.h. die chromatische Aberration, welche eine einfache Linse hat, zumindest für zwei Wellenlängen korrigiert werden, d.h., das System hat für diese zwei Wellenlängen die gleiche Schnittweite. Der Achromat korrigiert somit das primäre Spektrum, wie man den unkorrigierten Farbfehler bezeichnet. Der Farbfehler ist dann für zwei Wellenlängen beseitigt, aber bei den übrigen Wellenlängen besteht noch eine Abweichung. Diesen Rest des Farbfehlers nennt man sekundäres Spektrum. Wenn die beiden Linsen des Achromats dünn sind und einen kleinen Abstand voneinander haben, ist damit auch der Farbquerfehler weitgehend korrigiert. Damit kann die Lidar-Einrichtung mit Licht mit verschiedenen Wellenlängen genutzt werden, ohne dass die Optik ausgetauscht werden muss.

Gemäß einer speziellen Ausgestaltung der Erfindung ist das Objektiv ein Apochromat.

Ein Apochromat weist üblicherweise mindestens 3 Linsen auf, mit denen für drei Wellenlängen der Farblängsfehler korrigiert werden kann. Bei einem Apochromaten kann durch Einsatz von mindestens drei Glassorten auch das sekundäre Spektrum beseitigt werden. In dem dann noch verbleibenden Rest des Farbfehlers dominiert das tertiäre Spektrum. Für die Beseitigung des sekundären Spektrums wird mindestens eine Linse aus Glas (oder anderem Material) mit besonderen Dispersionseigenschaften, wie Fluorit, Langkronglas (Fluorkronglas) und Kurzflintglas verwendet. Langkronglas besitzt eine hohe Teildispersion im kurzwelligen (blauen) Bereich des Spektrums, d. h. die Brechzahl ändert sich hier stark mit der Wellenlänge, verglichen mit seiner Teildispersion im langwelligen (roten) Bereich. Kurzflintglas hat dagegen eine relativ geringe Teildispersion.

Durch den mindestens einen Aktor der Lidar-Einrichtung ist eine mechanische Ansteuerung der Linse bzw. der Objektivlinse ermöglicht.

In einer Variante der Erfindung ist der mindestens eine Aktor der Lidar-Einrichtung derart mit der mindestens einen Linse mechanisch gekoppelt, dass mittels des Aktors die mindestens eine Linse in einem Winkel zu der optischen Achse der Linsen-Anordnung der Sende-Einrichtung der Lidar-Einrichtung bewegbar ist.

Somit wird eine maschinelle Verschiebung der Linse gewährleistet, welche eine hohe Präzision und Reproduzierbarkeit bei der Justierung erlaubt.

Gemäß einem Aspekt ist die Linse in einem rechten Winkel zur optischen Achse der Linsen-Anordnung der Sende-Einrichtung der Lidar-Einrichtung bewegbar.

In einer anderen Ausgestaltung der Erfindung ist der mindestens eine Aktor ein Motor.

In einer besonders bevorzugten Ausgestaltung der Erfindung ist der Motor ein Schrittmotor.

Der Schrittmotor gewährleistet eine äußerst präzise definierte Verschiebung des Objektivs, so dass eine besonders hohe Genauigkeit bei der Feinjustierung der Lidar-Einrichtung erreicht wird.

In einer anderen Variante weist die optische Einrichtung eine Steuerungseinrichtung zum Steuern des mindestens einen Aktors auf.

Somit lässt sich beispielsweise auch eine Fernsteuerung der Verschiebung und Justierung des Objektivs realisieren, so dass die Lidar-Einrichtung auch über große Entfernungen hinweg bedient werden kann.

In einer anderen Ausgestaltung der Erfindung weist die Lidar-Einrichtung eine Lichtquelle auf, deren Licht durch die Linsen-Anordnung geleitet wird.

In einer bevorzugten Ausgestaltung der Erfindung ist die Lichtquelle der Lidar-Einrichtung ein Laser.

Das Laserlicht eignet sich aufgrund seines engen Frequenzspektrums und der Parallelität der Lichtstrahlen besonders gut für präzise Messungen auf große Distanz.

In einer speziellen Ausgestaltung der Erfindung ist die Lichtquelle dazu eingerichtet, Lichtpulse abzustrahlen.

Hiermit lässt sich besonders leicht eine nach unterschiedlicher Höhe aufgelöste Troposphärenmessung realisieren.

In einer anderen Variante weist die Lidar-Einrichtung mindestens ein Prisma auf, das das von der Lichtquelle ausgesandte Licht zu der Linsen-Anordnung leitet.

Gemäß einer Weiterbildung der Erfindung weist der Empfangsbereich der Empfangseinrichtung der Lidar-Einrichtung mindestens einen Spiegel auf, der das empfangene Licht reflektiert.

Gemäß einer speziellen Weiterbildung der Erfindung ist die Empfangseinrichtung der Lidar-Einrichtung ein Reflektor.

Mit einem Reflektor kann beispielsweise die Intensität des empfangenen Lichts erhöht werden, so dass auch schwache Messsignale detektiert werden können.

Gemäß einer speziellen Weiterbildung ist die Empfangseinrichtung der Lidar-Einrichtung ein newtonscher Reflektor, im Folgenden auch bezeichnet als Newton-Reflektor.

Der Newton-Reflektor weist in einer Ausgestaltung auf einen konkaven Hauptspiegel und einen flachen, um 45° zur Mittelachse geneigten Fangspiegel, der das Licht im rechten Winkel zur optischen Achse des Hauptspiegels bzw. des Reflektors ablenkt und aus dem Tubus zum Beobachter bzw. zur nächsten optischen Einheit leitet. Das Bild ist also senkrecht zur optischen Achse des Teleskops zu sehen.

Im Hinblick auf die Lidar-Einrichtung gemäß verschiedenen Ausführungsbeispielen steht Lidar für "light detection and ranging" und ist eine dem Radar sehr verwandte Methode zur Entfernungs- und Geschwindigkeitsmessung sowie zur Fernmessung atmosphärischer Parameter. Statt Funkwellen wie beim Radar werden jedoch Laserstrahlen verwendet.

Die Lidar-Einrichtung eignet sich besonders gut für Messungen in der Atmosphären- bzw. Troposphärenforschung. Lidar-Einrichtungen zur Troposphärenmessung senden Laserpulse aus und detektieren das aus der Troposphäre zurückgestreute Licht. Aus der Lichtlaufzeit der Signale und der Lichtgeschwindigkeit wird die Entfernung zum Ort der Streuung berechnet. Wolken- und Staubteilchen in der Luft (Aerosole) streuen das Laserlicht und ermöglichen somit eine hochauflösende Detektion und Entfernungsmessung von Wolken und Aerosolschichten.

Gemäß einer anderen Ausgestaltung der Erfindung ist die Lidar-Einrichtung ein Ceilometer, welche mindestens eine Photozelle im Empfangsbereich der Lidar-Einrichtung aufweist.

Mit Hilfe eines Ceilometers lassen sich fortlaufende Messungen der Wolkenuntergrenze durchführen. Das zugrundeliegende Messprinzip ist die impulsoptische Höhenmessung. Dazu wird ein Lichtimpuls auf die Wolkenschicht ausgesendet. Der für das menschliche Auge nicht sichtbare Widerschein wird dann beispielsweise durch einen mit einer Photozelle ausgestatteten Parabolspiegel aufgefangen. Durch die Laufzeit des Lichtimpulses vom Sender bis zum Empfänger kann man auf die Höhe der Wolkenuntergrenze schließen.

Gemäß einer alternativen Ausgestaltung der Erfindung ist die Lidar-Einrichtung eine Detektionseinrichtung zum Detektieren von Gaskonzentrationen.

Gemäß einer alternativen Ausgestaltung der Erfindung ist die Lidar-Einrichtung ein optisches Messsystem mit getrenntem Sendezweig und Empfangszweig.

Gemäß einer Variante des Verfahrens zum Justieren der Lidar-Einrichtung gemäß der Erfindung wird die mindestens eine Linse in einem rechten Winkel zur optischen Achse der Sende-Einrichtung nachjustiert.

Gemäß einer anderen Variante des Verfahrens wird als die mindestens eine Linse eine Objektivlinse verwendet.

Gemäß einer speziellen Variante des Verfahrens gemäß der Erfindung wird beim Nachjustieren das gesamte Objektiv verschoben.

Gemäß einer anderen Ausgestaltung des Verfahrens gemäß der Erfindung wird das Verschieben der mindestens einen Linse mittels mindestens eines Aktors durchgeführt.

In einer bevorzugten Ausgestaltung des Verfahrens gemäß der Erfindung wird als Aktor ein Motor verwendet.

Gemäß einer besonders bevorzugten Ausgestaltung des Verfahrens gemäß der Erfindung wird als Aktor ein Schrittmotor verwendet.

Ausführungsbeispiele der Erfindung sind in den Figuren dargestellt und werden im Folgenden näher erläutert.

Es zeigen
- Figur 1: eine Sende-Einrichtung einer optischen Einrichtung nach dem Stand der Technik;
- Figur 2: das Justieren der Richtung des Lichtstrahls der Sende-Einrichtung einer optischen Einrichtung;
- Figur 3: eine Lidar-Einrichtung gemäß einem Ausführungsbeispiel der Erfindung;
- Figur 4: eine Linsen-Anordnung gemäß einem Ausführungsbeispiel der Erfindung;
- Figur 5a: eine Laserstrahl-Abbildung in Form eines Spot-Diagramms bei unverschobenem Objektiv einer Lidar-Einrichtung gemäß einem Ausführungsbeispiel der Erfindung;
- Figur 5b: eine Laserstrahl-Abbildung in Form eines Spot-Diagramms bei um 1mm verschobenem Objektiv einer Lidar-Einrichtung gemäß einem Ausführungsbeispiel der Erfindung;
- Figur 6: ein Flussdiagramm zur Darstellung des Verfahrens zum Justieren der optischen Einrichtung gemäß der Erfindung.

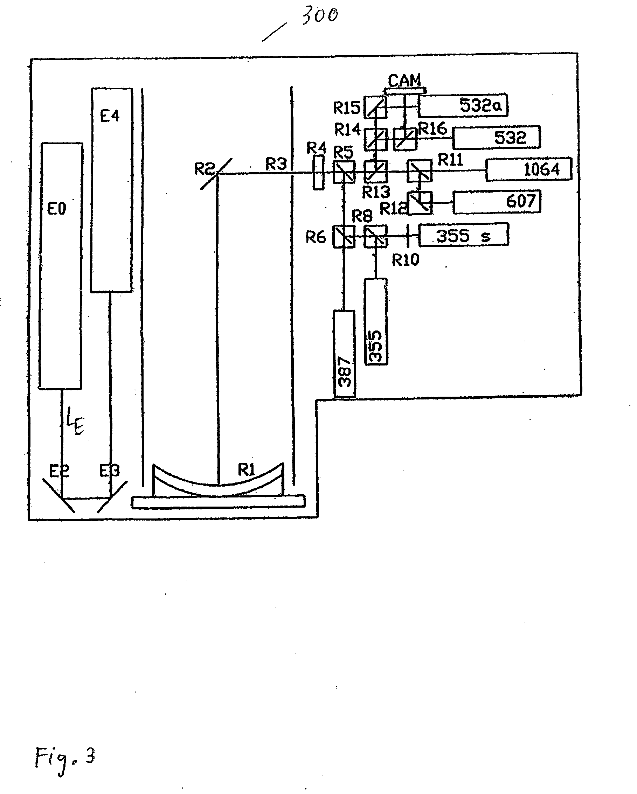

Fig. 3 zeigt eine Lidar-Einrichtung 300 mit einer Linsen-Anordnung gemäß einem ersten Ausführungsbeispiel der Erfindung. Hierbei handelt es sich um eine Lidar-Einrichtung, welche mit Licht mit drei verschiedenen Wellenlängen arbeiten kann. Die Komponenten zum Emittieren von Licht sind mit E (E für emit = Emittieren) bezeichnet und die optischen Empfangskomponenten sind mit R (R für receive = Empfangen) bezeichnet. Ein Laser E₀ ist auf einer separaten Metallplatte angeordnet, um eine geeignete und stabile Ausrichtung zu gewährleisten. Die Pulsenergie, die simultan emittiert wird, beträgt beispielsweise ungefähr 180 mJ für 1.064 nm Wellenlänge, 110 mJ für 532 nm Wellenlänge und 60 mJ für 355 nm Wellenlänge. Somit werden gemäß einem Ausführungsbeispiel drei Wellenlängen emittiert, in alternativen Ausführungsbeispielen kann der Laser E₀ eingerichtet sein zum Emittieren eines Laserstrahls von zwei Laserstrahlen unterschiedlicher Wellenlängen, alternativ zum Emittieren von mehr als drei Laserstrahlen jeweils unterschiedlicher Wellenlängen. Die emittierte Strahlung mit 355 nm Wellenlänge ist linear polarisiert. Die Divergenz des Lasers beträgt z.B. weniger als 1,5 mrad. Zwei Quarzprismen (E2 und E3) leiten den Lichtstrahl L_{E} in eine Aufwärtsrichtung um. Ein Strahlaufweiter E₄ vergrößert den Strahldurchmesser, beispielsweise von etwa 6 mm auf etwa 45 mm, bevor der Strahl in Richtung der Atmosphäre ausgerichtet wird. Das rückgestreute Licht wird von einem Newton-Teleskop mit den Elementen R₁ und R₂ gesammelt. Ein Hauptspiegel R₁ hat einen Durchmesser von 300 mm und eine Brennweite von 900 mm. Bei einem zusätzlichen Spiegel R₂ handelt es sich beispielsweise um einen Fangspiegel, der das Licht von dem Hauptspiegel R₁ empfängt und in Richtung einer Blende R₃ weiterleitet. Die Blende R₃ definiert das Empfängerfeld (auch Gesichtsfeld genannt) mit einem Sichtwinkel von beispielsweise etwa 1 mrad. Nach der Blende R₃ sammelt der Achromat R₄ das Licht und leitet es an beispielsweise 7 Kanäle weiter. Die zur Detektion verwendeten Komponenten sind Photomultiplier (Sekundärelektronenvervielfacher), welche aus einer Photokathode und nachgeschalteten Dynodenstufen bestehen. Die Strahlteiler R₅, R₆, R₁₁ und R₁₃ teilen das Licht bezüglich seiner Wellenlänge auf. Der Strahlteiler R₅ arbeitet als hochempfindlicher Spiegel für das UV-Licht, während der Strahlteiler R₁₃ als hochempfindlicher Spiegel für Licht mit 532 nm Wellenlänge arbeitet. Der Strahlteiler R₆ teilt den UV-Lichtstrahl in Licht der Wellenlänge 387 nm, welches bei einem inelastischen Streuprozess generiert wurde, und Licht der Wellenlänge 355 nm auf. Der Strahlteiler R₁₁ transmittiert Licht der Wellenlänge 1064 nm und reflektiert Licht der Wellenlänge 607 nm, welches auch bei einem inelastischen Streuprozess generiert wurde. Der Strahlteiler R₈ leitet 70% der Intensität des Lichts an den Kanal für die Detektion des rückgestreuten depolarisierten Lichts weiter und 30% der Intensiät an den Kanal für die Detektion der Intensität des total rückgestreuten Lichts mit einer Wellenlänge von 355 nm. Die Strahlteiler R₁₄ und R₁₆ reflektieren 50 % und transmittieren 50 % der Intensität von Licht mit einer Wellenlänge von 532 nm. Die Elemente R₁₁ und R₁₃ sind dichroitische Strahlteiler und die Elemente R₁₂ und R₁₅ sind Spiegel. Der Polarisationsfilter R₁₀ ist vor dem Kanal für Licht der Wellenlänge 355 nm angeordnet, um die Detektion von kreuzpolarisiertem Licht mit einer Wellenlänge von 355 nm zu gewährleisten.

Die installierte Kamera CAM wird zum Beobachten und Einstellen des Überlappens des emittierten Strahls und des Empfängerfeldes verwendet. Ein Interferenzfilter und eine plankonvexe Linse mit einer Brennweite von 60 mm sind vor jedem Photomultiplier montiert. Die Photomultiplier (Sekundärelektronenvervielfacher) sind Elektronenröhren, die jeweils innerhalb einer Vakuumröhre eine Photokathode und nachgeschaltet Dynodenstufen aufweisen, in welchen durch Sekundärelektronen-Emission kleinste Elektronenströme oder sogar Einzelelektronen mit hoher Zeitauflösung um viele Größenordnungen bis zu messbaren Größen verstärkt werden können.

Alle optischen Elemente in dem Empfängergehäuse weisen beispielsweise Durchmesser von 40 mm auf. Die Filter für die Kanäle für die elastische Streuung bei Wellenlängen von 354,72 nm, 532,08 nm und 1.064,15 nm haben eine Bandbreite von 1 nm. Die Filter für die Kanäle für die Detektion des inelastisch gestreuten Lichts mit einer Wellenlänge von 386,69 nm und 607,4 nm haben eine Bandbreite von 0,3 nm. Weiterhin werden während der Lidar-Messungen die Oberflächentemperatur und der Oberflächendruck gemessen. Diese Daten werden verwendet, um die Rayleigh-Streuung beispielsweise an zu messenden Partikeln oder Aerosolen in der Troposphäre mittels automatischer Datenabfrage-Algorithmen zu ermitteln, wobei eine Standardatmosphäre angenommen wird.

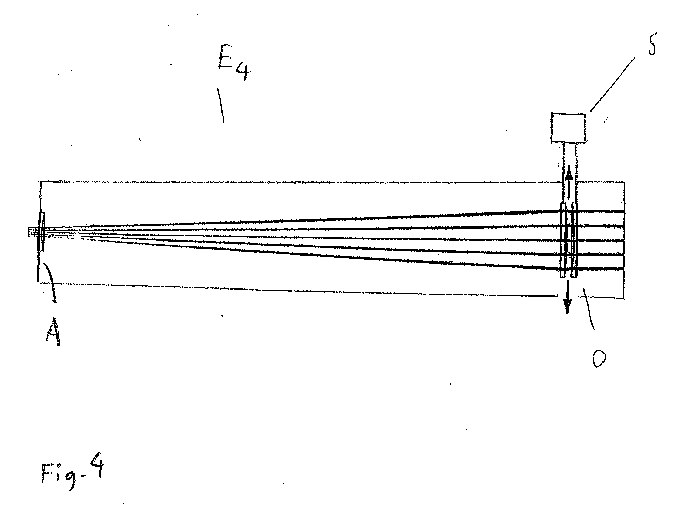

Der Strahlaufweiter E₄ weist beispielsweise eine Aufweitungslinse auf, welche den Lichtstrahl aufweitet, und ein Objektiv auf, welches das durch den Strahlaufweiter geleitete Licht parallelisiert. Das Objektiv ist beispielsweise als Achromat oder Apochromat ausgeführt, was die Verwendung von Licht mit mehreren Wellenlängen ermöglicht und somit die simultane Analyse verschiedener zu detektierender Messgrößen erlaubt. Zur Justierung der Lidar-Einrichtung geschieht die Ausrichtung des Lichtstrahls in einem Ausführungsbeispiel zunächst manuell, anschließend wird der Strahlaufweiter E₄ in den Strahlengang des Lichtstrahls eingesetzt und eine Feinjustage der Sende-Einrichtung mittels Verschiebens des Objektivs in senkrechter Richtung zu der optischen Achse des Strahlaufweiters E₄ vorgenommen. Diese Verschiebung wird zum Beispiel mittels eines Motors, beispielsweise mittels eines Schrittmotors S (siehe Figur 4) durchgeführt, der das Objektiv um eine exakt definierte Distanz senkrecht zu der optischen Achse verschiebt. Der Schrittmotor S (siehe Figur 4) kann beispielsweise mittels einer Steuerungsschaltung (nicht gezeigt) angesteuert werden.

Fig. 4 zeigt den Strahlaufweiter E₄ gemäß einem Ausführungsbeispiel der Erfindung im Detail. Auf der Eingangsseite des Strahlaufweiters E₄ ist beispielsweise eine Meniskuslinse als Aufweitungslinse A angeordnet, durch die das Licht von dem Prisma E₃ (in Figur 3 gezeigt) aus in den Strahlaufweiter E₄ geleitet wird. Auf der Ausgangsseite des Strahlaufweiters E₄ ist das Objektiv O beispielsweise mit einer bikonvexen Linse und einer konkavkonvexen Linse angeordnet, welches mittels eines oberhalb des Gehäuses angeordneten Schrittmotors S in senkrechter Richtung zu der optischen Achse des Strahlaufweiters E₄ verschoben werden kann. Die Verwendung eines Schrittmotors S als Antriebseinrichtung für die Verschiebemechanik des Objektivs O gewährleistet eine exakte Verschiebungsdistanz des Objektivs in senkrechter Richtung zu der optischen Achse des Strahlaufweiters E₄. Mit den angeführten Linsen ist ein beugungsbegrenzter achromatischer bzw. apochromatischer Linsenteleskop-Strahlaufweiter für mindestens drei verschiedene Wellenlängen geschaffen, bei dem ein minimales seitliches Verschieben des Objektivs die Strahlrichtung leicht verändert.

Es wurde überprüft, dass durch das Verschieben des Objektivs senkrecht zur optischen Achse des Strahlaufweiters E₄ die Laserstrahlqualität nur unwesentlich verändert wird, wobei ein Richtungsbereich von mehr als 3 mrad überschritten wurde. Dies ist mehr als ausreichend, um eine übliche Nachregelung während des Lidar-Betriebs durchzuführen. Die Verwendung der Schrittmotoren hat zudem den Vorteil, dass eine Fernsteuerbarkeit der Überlappjustierung gewährleistet ist. Die Überprüfung der Einstellung des Strahlaufweiters E₄ kann mit Hilfe einer Abbildung vom Empfangsteleskop auf eine CCD-Kamera CAM ausgeführt werden.

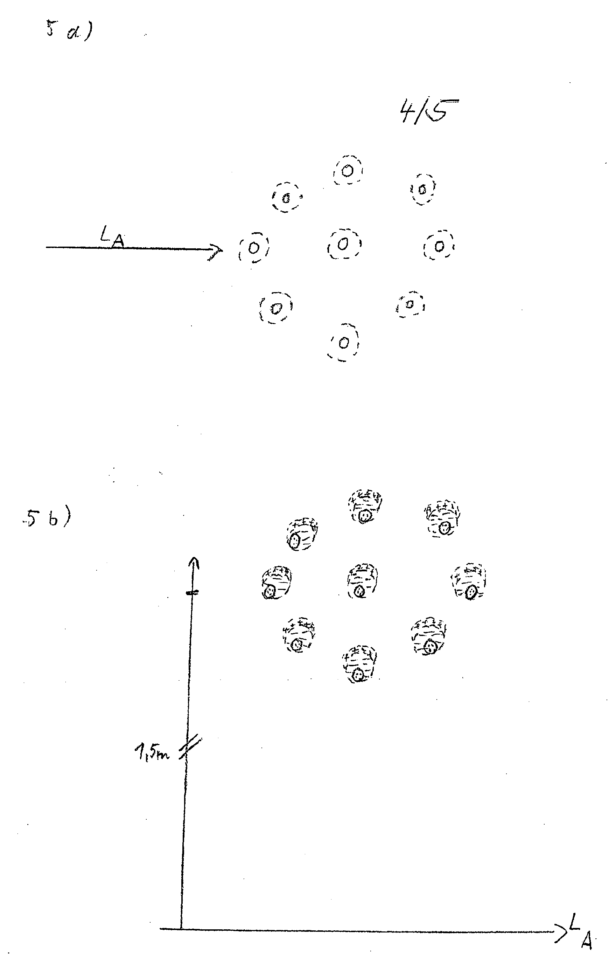

Die Figuren 5a und 5b zeigen, dass die mit dem Verschieben der Linsen verbundenen Abbildungsfehler nicht zu einer erheblichen Verschlechterung der Laserstrahlqualität der emittierten Strahlung führen. Die Funktion des Strahlaufweitungsteleskops, das zur Verringerung der Divergenz beiträgt, wird somit nicht beeinträchtigt.

Figur 5a zeigt den aufgeweiteten Laserstrahl L_{A} mit einer Divergenz von 0,2 mrad.

Figur 5b zeigt das Bild des Laserstrahls bei einer Verschiebung des Objektivs um etwa 1 mm senkrecht zur Teleskopachse, was zu einer Änderung der Laserstrahlrichtung um etwa 1,5 mrad führt. Durch beidseitiges Verschieben um etwa 1 mm lässt sich also ein Richtungsbereich von 3 mrad während der Justierung durchschreiten.

Es ist anzumerken, dass, wie in Fig. 5b zu sehen, der Laserstrahl keine ausgeprägten Abbildungsfehler aufweist. Die Divergenz des Laserstrahls bleibt also auch nach der Verschiebung des Objektivs erhalten. In der Darstellung der Figuren 5a und 5b wurde als Laserstrahl ein Bündel von insgesamt 9 Strahlen verwendet. Der gepunktete Bereich entspricht Infrarotlicht, mit der Wellenlänge 1.064 nm, der gestrichelte Bereich grünem Licht mit einer Wellenlänge von 532 nm und der mit Kreuzen versehene Bereich entspricht UV-Licht mit einer Wellenlänge von 355 nm. Die Abszisse der Schaubilder entspricht der Achse des unaufgeweiteten Strahls, die Ordinate gibt die Entfernung des Laserstrahls von der ursprünglichen optischen Achse der Sende-Einrichtung der optischen Einrichtung in 1 km Entfernung von der Lidar-Einrichtung an.

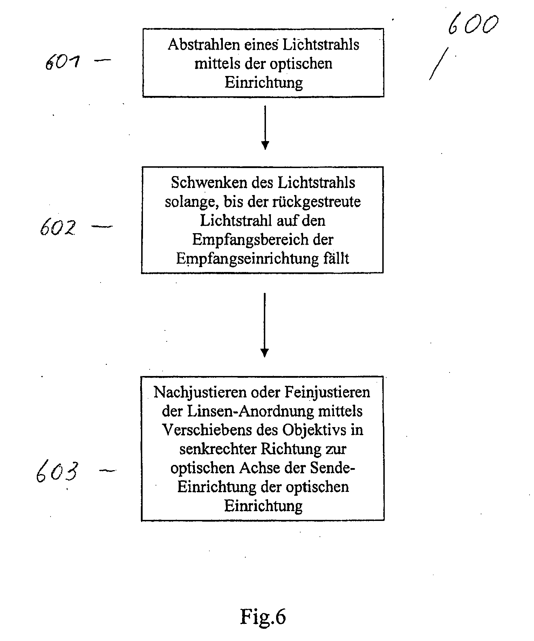

Fig. 6 zeigt ein Flussdiagramm 600, welches ein Verfahren zum Justieren der Lidar-Einrichtung aufweisend die optischen Einrichtung gemäß der Erfindung beschreibt, wobei in 601 zunächst ein Lichtstrahl mittels der optischen Einrichtung abgestrahlt wird, dann in 602 der Lichtstrahl solange geschwenkt wird, bis der rückgestreute Lichtstrahl auf den Empfangsbereich der Empfangseinrichtung fällt, und in 603 die Linsen-Anordnung mittels Verschiebens des Objektivs in einem Winkel zur optischen Achse der Sende-Einrichtung nachjustiert wird. Beispielsweise wird das Justieren des Objektivs in einem rechten Winkel zur optischen Achse der Sende-Einrichtung vorgenommen. Zum Verschieben des Objektivs kann insbesondere ein Schrittmotor verwendet werden, mit dessen Hilfe eine präzise Anpassung der Strahlrichtung durchgeführt werden kann, wobei mittels des Schrittmotors auch eine Fernsteuerung der Verschiebung ermöglicht werden kann.

Die erfindungsgemäße Anordnung ermöglicht es somit, eine mobile optische Einrichtung zur Verfügung zu stellen, welche leicht transportierbar ist, wenig Gewicht hat, kostengünstig ist, wenig Platz verbraucht, wenig Energie verbraucht, die aufgrund der geringen Anzahl an optischen Elementen die Verschlechterung der Laserstrahlqualität verhindert, die Intensitätsverluste des Laserstrahls aufgrund von Reflexionen an Spiegeln und auch die Verschlechterung der Reinheit von beispielsweise linear polarisiertem Licht vermeidet, welche bei der Reflexion an Spiegeln auftreten kann.

Die Erfindung ist nicht auf Lidar-Einrichtungen beschränkt, sondern kann auch auf andere Einrichtungen angewandt werden, beispielsweise auf optische Detektoren oder Geräte, die einen Sendezweig und einen Empfangszweig haben, deren optische Achsen sich in irgend einem Bereich überlappen müssen.

Ein mögliches Anwendungsgebiet sind zum Beispiel Ceilometer, mit denen sich fortlaufende Messungen der Wolkenuntergrenze durchführen lassen.

Ein weiteres Anwendungsfeld sind Detektionseinrichtungen zum Detektieren von Gaskonzentrationen.

### Bezugszeichenliste

- 100: Lidar-Einrichtung
- E₀: Laser
- D₁: Durchmesser des Lichtstrahls vor dem Lichstrahlaufweiter
- E₂: Prisma
- E₃: Prisma
- E₄: Lichtstrahlaufweiter
- D₂: Durchmesser des aufgeweiteten Lichtstrahls
- Z: Z-Stufe
- L_{A}: aufgeweiteter Lichtstrahl
- E₅: justierbarer Spiegel
- E₆: justierbarer Spiegel
- 200: Empfangseinrichtung
- L_{R}: rückgestreuter Lichtstrahl
- A_{R}: Empfangsbereich
- R₁: Hauptspiegel
- 300: Lidar-Einrichtung
- R₂: Fangspiegel
- R₃: Blende
- R₄: Achromat
- R₅: Strahlteiler reflektiert UV-Licht
- R₆: Strahlteiler
- R₈: Strahlteiler
- R₁₀: Polarisationsfilter
- R₁₁: Strahlteiler
- R₁₂: Strahlteiler
- R₁₃: Strahlteiler
- R₁₄: Strahlteiler
- R₁₅: Strahlteiler
- R₁₆: Strahlteiler
- CAM: Kamera
- O: Objektiv
- A: Aufweitungslinse
- S: Schrittmotor
- 600: Flussdiagramm

## Patentansprüche

1. Lidar-Einrichtung (300) aufweisend eine optische Einrichtung mit einer Sende-Einrichtung mit einer Linsen-Anordnung zum Aussenden eines Lichtstrahls (L_{E}), welcher Laserlicht mit mindestens zwei unterschiedlichen Wellenlängen aufweist und zurückgestreut wird, und einer Empfangseinrichtung mit einem Empfangsbereich zum Empfangen zumindest eines Teils des rückgestreuten Lichtstahls, wobei die Linsen-Anordnung aufweist:
eine Aufweitungslinse (A) zum Aufweiten eines durch die Linsen-Anordnung (E₄) verlaufenden Lichtstrahls (L_{E}),
ein Objektiv (O) mit mindestens einer Linse, welche das aufgeweitete Licht parallelisiert, wobei das Objektiv (O) ein Achromat ist und die mindestens eine Linse in einem Winkel zur optischen Achse der Linsen-Anordnung (E₄) verschiebbar gelagert ist zum Einstellen der Richtung des parallelisierten Lichtstrahls (L_{E}),
wobei die optische Einrichtung ferner mindestens einen Aktor, der mit der mindestens einen Linse mechanisch gekoppelt ist, und eine Steuerungseinrichtung zum Steuern des mindestens einen Aktors aufweist, wobei die Steuereinrichtung den Aktor derart ansteuert, dass ein Überlapp des ausgesendeten Lichtstrahls (L_{E}) und eines Empfängerfeldes der Empfangseinrichtung eingestellt wird.

2. Lidar-Einrichtung (300) nach Anspruch 1, wobei die mindestens eine Linse in einem rechten Winkel zur optischen Achse der Linsen-Anordnung (E₄) verschiebbar gelagert ist.

3. Lidar-Einrichtung (300) nach einem der Ansprüche 1 oder 2, wobei die mindestens eine Linse eine Objektivlinse ist.

4. Lidar-Einrichtung (300) nach einem Ansprüche 1 bis 3, wobei das Objektiv (O) mindestens eine Sammellinse und eine Streulinse aufweist.

5. Lidar-Einrichtung (300)nach einem der Ansprüche 1 bis 4, wobei der mindestens eine Aktor derart mit der mindestens einen Linse mechanisch gekoppelt ist, dass mittels des Aktors die mindestens eine Linse in einem Winkel zu der optischen Achse der Linsen-Anordnung der Sende-Einrichtung der optischen Einrichtung bewegbar ist.

6. Lidar-Einrichtung (300) nach Anspruch 5, wobei die mindestens eine Linse in einem rechten Winkel zu der optischen Achse der Linsen-Anordnung (E₄) der Sende-Einrichtung der optischen Einrichtung bewegbar ist.

7. Lidar-Einrichtung (300) nach einem der Ansprüche 1 bis 6, wobei der mindestens eine Aktor ein Motor ist.

8. Lidar-Einrichtung (300) nach Anspruch 7, wobei der Motor ein Schrittmotor (S) ist.

9. Lidar-Einrichtung (300) nach einem der vorangehenden Ansprüche, welche eine Lichtquelle aufweist, deren Licht durch die Linsen-Anordnung (E₄) geleitet wird.

10. Lidar-Einrichtung (300) nach Anspruch 9, wobei die Lichtquelle ein Laser (E₀) ist.

## Claims

1. LIDAR arrangement (300) comprising an optical arrangement with an emitting arrangement having an array of lenses for emitting a beam of light (L_{E}), which includes laser light with at least two different wavelengths and is reflected, and a receiving arrangement with a receiving area for receiving at least a part of the reflected beam of light, wherein the array of lenses comprises:
a diverging lens (A) for diverging a beam of light (L_{E}) propagating through the array of lenses (E₄),
an objective (O) with at least one lens which renders the divergent beam of light parallel, wherein the objective (O) is an achromat and the at least one lens is mounted such that it is movable at an angle with respect to the optical axis of the array of lenses (E₄) for adjusting the direction of the parallelized beam of light (E₄),
wherein the optical arrangement further comprises at least one actuator, which is mechanically coupled with the at least one lens, and a control device for controlling the at least one actuator, wherein the control device controls the actuator such that an overlap of the emitted beam of light (L_{E}) and an receiving area of the receiving arrangement is set.

2. LIDAR arrangement (300) of claim 1, wherein the at least one lens is mounted such that it is movable at a right angle with respect to the optical axis of the array of lenses (E₄).

3. LIDAR arrangement (300) of claim 1 of 2, wherein the at least one lens is an objective lens.

4. LIDAR arrangement (300) of any one of the claims 1 to 3, wherein the objective (O) comprises at least a converging lens and a diverging lens.

5. LIDAR arrangement (300) of any one of the claims 1 to 4, wherein the at least one actuator is mechanically coupled to the at least one lens in such a way that the at least one lens is movable at an angle with respect to the optical axis of the array of lenses of the emitting arrangement of the optical arrangement by means of the actuator.

6. LIDAR arrangement (300) of claim 5, wherein the at least one lens is movable at a right angle with respect to the optical axis of the array of lenses (E₄) of the emitting arrangement of the optical arrangement .

7. LIDAR arrangement (300) of any one of the claims 1 to 6, wherein the at least one actuator is a motor.

8. LIDAR arrangement (300) of claim 7, wherein the motor is a stepping motor (S).

9. LIDAR arrangement (300) of any one of the preceding claims comprising a light source the light of which is guided through the array of lenses (E₄).

10. LIDAR arrangement (300) of claim 9, wherein the light source is a laser (E₀).

## Revendications

1. Lidar (300) comportant un dispositif optique avec un dispositif émetteur et un agencement de lentilles pour l'émission d'un rayon lumineux (L_{E}) qui comprend une lumière laser avec au moins deux longueurs d'onde différentes et qui est renvoyé, et un dispositif récepteur avec une zone de réception pour la réception d'au moins une partie du rayon lumineux renvoyé, l'agencement de lentilles comportant :
une lentille divergents (A) pour la divergence d'un rayon lumineux (LE) traversant l'agencement de lentilles (E₄),
un objectif (O) avec au moins une lentille pour convertir la lumière divergée en lumière parallèle, ledit objectif (O) étant un achromat et la ou les lentilles étant montées de manière à être déplaçables angulairement par rapport à l'axe optique de l'agencement de lentilles (E₄) pour le réglage directionnel du rayon lumineux (L_{E}) parallélisé,
le dispositif optique comportant en outre au moins un actionneur couplé mécaniquement à la lentille ou aux lentilles, et un dispositif de commande pour la commande de l'actionneur ou des actionneurs, ledit dispositif de commande commandant l'actionneur de manière à régler un chevauchement du rayon lumineux (L_{E}) émis et d'un champ de réception du dispositif récepteur.

2. Lidar (300) selon la revendication 1, dans lequel la ou les lentilles sont montées de manière à être déplaçables à angle droit par rapport à l'axe optique de l'agencement de lentilles (E₄).

3. Lidar (300) selon la revendication 1 ou 2, dans lequel la ou les lentilles sont des lentilles d'objectif.

4. Lidar (300) selon l'une des revendications 1 à 3, dans lequel l'objectif (O) comporte au moins une lentille convergente et une lentille divergente.

5. Lidar (300) selon l'une des revendications 1 à 4, dans lequel le ou les actionneurs sont couplés mécaniquement à la lentille ou aux lentilles, de manière à permettre le déplacement angulaire, au moyen de l'actionneur, de la lentille ou des lentille par rapport à l'axe optique de l'agencement de lentilles du dispositif émetteur du dispositif optique.

6. Lidar (300) selon la revendication 5, dans lequel la ou les lentilles sont déplaçables à angle droit par rapport à l'axe optique de l'agencement de lentilles (E₄) du dispositif émetteur du dispositif optique.

7. Lidar (300) selon l'une des revendications 1 à 6, dans lequel le ou les actionneurs sont des moteurs.

8. Lidar (300) selon la revendication 7, dans lequel le moteur est un moteur pas à pas (S).

9. Lidar (300) selon l'une des revendications précédentes, comportant une source alumineuse dont la lumière est guidée au travers de l'agencement de lentilles (E₄).

10. Lidar (300) selon la revendication 9, dans lequel la source lumineuse est un laser (E₀).
